# EUROPEAN PATENT SPECIFICATION

(11) **EP 3 113 661 B1**
(45) Date of publication and mention of the grant of the patent: **08.05.2019**
(21) Application number: 15711003.2
(22) Date of filing: 05.03.2015
(51) Int. Cl.: A47J 43/046, A47J 43/07

(54) **BLENDER**
MISCHER
MÉLANGEUR

(30) Priority: 07.03.2014 US 201414201771
(43) Date of publication of application: 11.01.2017
(73) Proprietor: SharkNinja Operating LLC, Needham, MA 02494 (US)
(72) Inventor: HYP, Eric, Daniel, Yongkang City, 321300 (CN)
(74) Representative: Harris, Oliver John Richard
(86) International application number: PCT/US2015/018854
(87) International publication number: WO 2015/134694

(56) References cited:
- EP-A1- 1 586 259
- EP-A1- 2 368 470

## Description

### FIELD OF THE INVENTION

Aspects herein generally relate to food processing equipment such as blenders. More specifically, aspects herein relate to connecting a blender jar to a blender base, and operation of the blender.

### DISCUSSION OF RELATED ART

Food processors such as blenders rotate a processing tool (e.g., a blade assembly) within a container to assembly to process food. The container is removably mountable to a blender base such that when mounted, a drive coupling on the base rotates a driven coupling on the container to rotate the processing tool. In some blenders, the container is an inverted jar having a lid which includes the driven coupling on the outside and a blade assembly attached on the inside. The container has radially-protruding tabs which are received in corresponding slots in the blender base. The container typically is moved vertically downwardly so that each tab enters through a vertical portion of a slot, followed by rotation of the container to move each tab through a horizontal portion of its corresponding slot.

Document EP-A-2 368 470 discloses an apparatus comprising a blender jar having first and second engagement members; and a blender base including a motor to drive a drive coupling; a jar mounting portion to receive the blender jar; first and second engagement member receiving slots including lateral portions configured to receive the first and second engagement members, respectively, via rotation of the blender jar relative to the base by a user such that each of the first and second engagement members moves into a lateral portion of its respective slot; the first engagement member receiving slot having a movable member within the lateral portion; and switches which are required to be toggled to permit operation of the motor; and can be toggled by movement of a movable member in the first and second receiving slots; wherein the slot and the movable member are arranged such that the first engagement member can be moved into contact with the movable member without each of the one or more switches being toggled; and additional user force on the jar after the first engagement member has been moved into contact with the movable member toggles the switches that are required to be toggled to permit operation of the motor.

### SUMMARY

According to one embodiment, an apparatus includes a blender jar having first and second engagement members. The apparatus also includes a blender base having a motor to drive a drive coupling, a jar mounting portion to receive the blender jar, and first and second engagement member receiving slots. The first and second engagement member receiving slots are configured to receive the first and second engagement members, respectively, via rotation of the blender jar relative to the base by a user such that each of the first and second engagement members moves through a lateral portion of its respective slot. The first engagement member receiving slot has a movable member within the lateral portion, the moveable member being configured to be moved by rotation of the first engagement member into the lateral portion. The apparatus includes one or more switches which are: required to be toggled to permit operation of the motor; and can be toggled by movement of a movable member in at least one of the first and second receiving slots. The movable member is arranged to retain the first engagement member in the first receiving slot without each of the one or more switches being toggled. Additional user force on the jar after the first engagement member has been retained in the first receiving slot toggles the one or more switches that are required to be toggled to permit operation of the motor.

According to another embodiment, an apparatus includes a blender jar having first and second engagement members. The apparatus also includes a blender base having a motor to drive a drive coupling, a jar mounting portion to receive the blender jar, and first and second engagement member receiving slots. The receiving slots include lateral portions configured to receive the first and second engagement members, respectively, via rotation of the blender jar relative to the base by a user such that each of the first and second engagement members moves into a lateral portion of its respective slot. The first engagement member receiving slot has a movable member within the lateral portion. The apparatus also includes one or more switches which are: required to be toggled to permit operation of the motor; and can be toggled by movement of a movable member in at least one of the first and second receiving slots. The slot and the movable member are arranged such that the first engagement member can be moved into contact with the movable member without each of the one or more switches being toggled. Additional user force on the jar after the first engagement member has been moved into contact with the movable member toggles the one or more switches that are required to be toggled to permit operation of the motor.

In a further embodiment, an apparatus includes a blender jar having first and second engagement members. The apparatus also includes a blender base having a motor to drive a drive coupling, a jar mounting portion to receive a blender jar, and first and second engagement member receiving slots. The receiving slots are configured to receive the first and second engagement members, respectively, via rotation of the blender jar relative to the base. The first receiving slot has a blocking surface which impedes movement of the first engagement member in a jar release direction after the first engagement member is received in the slot, the blocking surface being transverse to the release direction. The blender base includes a switch which can be toggled by movement of an engagement member in a receiving slot. Toggling of the switch is required to permit actuation of the motor.

In still another embodiment, an apparatus includes a blender jar having first and second engagement members, and a blender base. The blender base includes a motor to drive a drive coupling, a jar mounting portion to receive a blender jar, and first and second engagement member receiving slots configured to receive the first and second engagement members of the blender jar, respectively. The blender base includes a switch which is toggled when an engagement member receiving slot receives and fully engages with an engagement member of the blending jar. Toggling of the switch is required to permit the blender base to actuate the motor. The first receiving slot includes a first slot contact surface. The first engagement member has an engagement member contact surface which slides along the first slot contact surface as the engagement member travels in an engagement direction within the slot when the jar is being mounted to the base via rotation of the jar relative to the base. The first engagement member contact surface is transverse to the engagement direction and/or the first slot contact surface is transverse to the engagement direction.

According to yet another embodiment, a method of operating a blender is disclosed. The blender includes a blender jar with engagement members, and a blender base having a motor and receiving slots to receive the engagement members. The method includes aligning the engagement members with the receiving slots, and rotating the blender jar to move the engagement members within lateral portions of the receiving slots without turning on the motor or placing the blender in a condition where the motor can be turned on without further movement of the blender jar. The method also includes pressing on the blender jar to turn on the motor or to place the blender in a condition where the motor can be turned on without further movement of the blender jar.

### BRIEF DESCRIPTION OF THE DRAWINGS

The accompanying drawings are not intended to be drawn to scale. In the drawings, each identical or nearly identical component that is illustrated in various figures is represented by a like numeral. For purposes of clarity, not every component may be labeled in every drawing. Various embodiments of the invention will now be described, by way of example, with reference to the accompanying drawings, in which:
Fig. 1 is a perspective view of a blender jar assembly according to one embodiment;
Fig. 2 shows the blender jar assembly of Fig. 1 mounted to blender base according to one embodiment;
Fig. 3 shows a jar mounting portion of the blender base of Fig. 2;
Fig. 4 shows a jar engagement region of the blender base according to one embodiment;
Fig. 5 shows the jar engagement region with a jar engagement member engaged with the blender base, according to one embodiment;
Fig. 6 shows an alternative embodiment of a jar assembly;
Fig. 7 shows an alternative embodiment of a jar mounting portion of a blender base; and
Fig. 8 shows an alternative embodiment of a jar engagement region of the blender base.

### DETAILED DESCRIPTION

Typical blenders include a container that is mountable to a blender base, and may include a user interface to start the blender. Some blenders are started simply by placing the container on the base and pressing downwardly on the container. One example of such a blender is the type of blender that is often referred to as a personal blender or a single-serve blender.

One type of a typical personal blender includes an inverted jar assembly that has radially protruding tabs at an outer edge of the area that is mounted to the blender base. The user aligns the tabs with vertical slots in the blender base, and presses downwardly on the jar assembly to depress spring-biased plungers in the blender base, which activates the blender motor by toggling one or more switches in the blender base. In this manner, the user can pulse the blender on and off by pressing the jar downwardly and then releasing pressure until the spring-biased plungers rebound and toggle the switches to turn off the blender.

Some personal blenders allow for extended operation without constant user pressure on the jar assembly. For example, as before, the user aligns the tabs with vertical slots in the blender base, and presses downwardly on the jar assembly to depress spring-biased plungers in the blender base. The user then rotates the jar assembly such that the tabs travel through a lateral slot. An upper wall of the slot keeps the tabs positioned such that they sufficiently depress the plungers to keep the blender running, and the spring-biased plungers press against the tabs which increases the friction between the tabs and the slot, thereby helping retain the tabs in the slot.

The inventors have recognized that when pushing and releasing the jar assembly to pulse a personal blenders, the jar can feel wobbly as it is not restrained from movement out of the vertical slots. However, in blenders that allow a rotation which can better engage the jar assembly with the blender base, short pulsing cannot be achieved because the blender cannot be pulsed in the rotated, engaged position. Embodiments disclosed herein are directed to permitting pulsing with a more positively engaged jar assembly. In some embodiments, by positioning tabs or other movable members within a lateral portion of a slot, the blender base may have an improved holding of the tabs and therefore the blender jar.

Additionally, embodiments disclosed herein provide tactile and/or audible feedback to the user that the jar assembly has engaged with the blender base. For example, when the jar assembly is rotated into an engagement position, a depressible plunger may at least partially rebound and strike a surface of an engagement tab, thereby making a noise and/or allowing the user to feel the resulting vibration in the jar_{.}

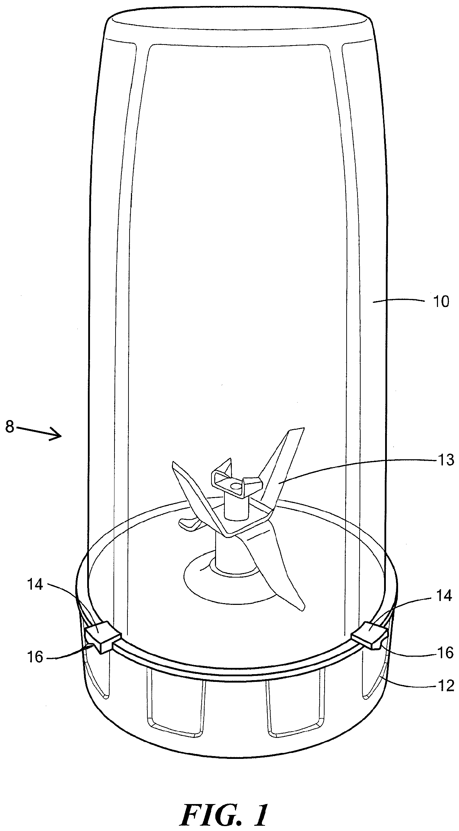

Fig. 1 shows a jar assembly 8 including a jar 10 and a jar base 12 which is removably attachable to jar 10 with threads (not shown). Jar 10 includes four equally spaced engagement members (only two are show in Fig. 1), which in this embodiment are tabs 14, though any suitable type and/or number of engagement members may be used. In some embodiments, the tabs or other engagement members extends from jar base 12 instead of jar 10. As discussed further below, one or more of tabs 14 includes a concave region 16.

A processing assembly, such as blades 13, is positioned within jar 10 when jar base 12 is attached to the jar. A driven coupling (not shown) is positioned on the outside of jar base 12 so that the blades can be rotated.

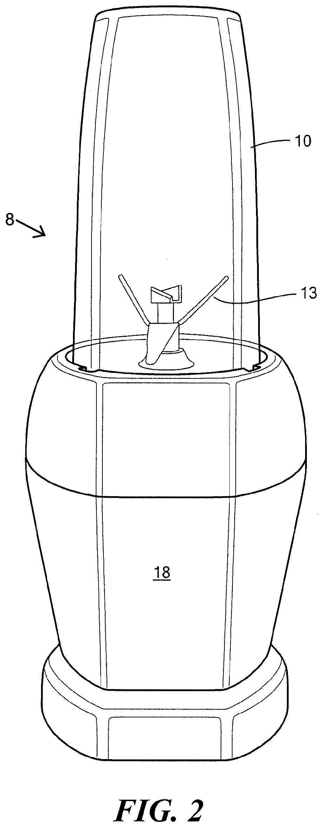

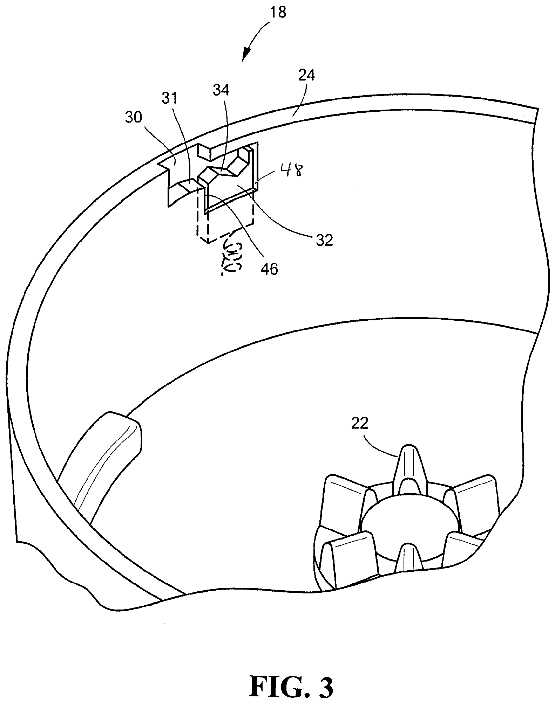

Jar assembly 8 is shown in Fig. 2 mounted to a blender base 18. Blender base 18 includes a motor which rotates a drive coupling 22 (see Fig. 3), which in turn rotates the blades 13 via the driven coupling on jar base 12. An inverted jar assembly is not the only type of jar that can be used with embodiments disclosed herein. For example, one type of jar assembly which may be used is a blender container having an opening and a lid at a top of the container, and a driven coupler on the underside of the bottom of the container. In such an embodiment, the container may have protruding tabs at the bottom of the container. Any suitable type of jar may be used with embodiments disclosed herein.

Fig. 3 shows a jar mounting portion including an upstanding collar 24 having engagement member receiving slots 30. Each slot 30 corresponds with the spacing of tabs 14 on the jar. When the tabs are aligned with the slots, the tabs may be moved to the bottom of the slots and rest on a floor surface 31.

Slots 30 include a lateral portion into which tabs 14 can travel when the jar is rotated. As the tabs travel in an engagement direction into these lateral portions, one or more of the tabs may depress a plunger 32. The interaction of the plunger and the tab may retain the tab in the slot, provided tactile feedback to the user, and/or toggle a switch in various embodiments. A wall 46 may block rotation of the tab out of a second vertical section 48 of the slot when the plunger is sufficiently depressed.

The lateral portion of a slot need not be horizontal. For example, a slot may be slanted relative to the top and/or bottom of the blender base and/or collar, and still be considered to be a lateral portion of the slot.

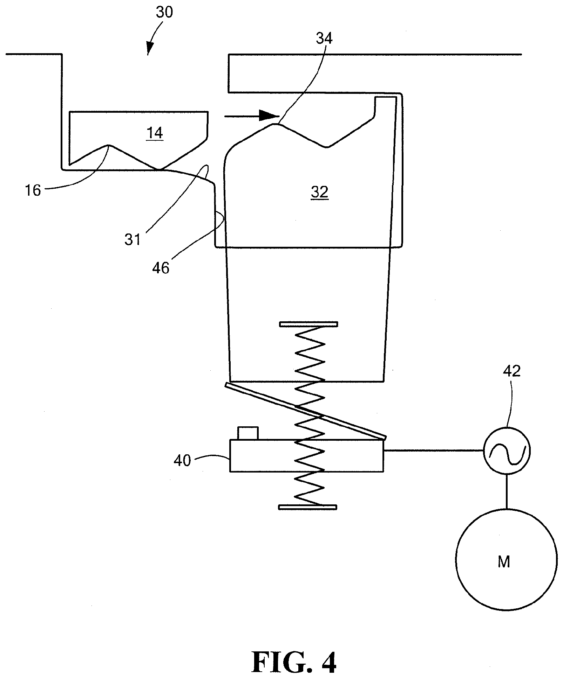

Fig. 4 is a schematic diagram of one embodiment of a tab, plunger and switch arrangement which permits the tab and plunger to engage without toggling the switch. A switch 40 may be provided which activates a motor M by allowing electricity to be deliver to the motor. In some embodiments, toggling of switch 40 may be necessary but not sufficient for starting the motor. For example, with switch 40 toggled by plunger 32, a further step of pressing a button on the blender base may be required before the blender starts. Or two or more switches may be required to be toggled by separate plungers before the blender turns on or is permitted to be turned on by additionally pressing a button or other action.

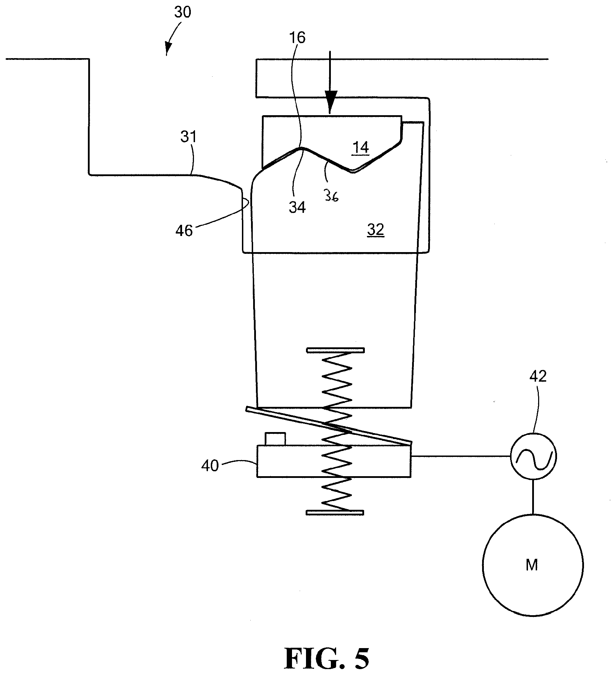

In the embodiment shown in Figs. 4 and 5, tab 14 can be engaged with plunger 32 without toggling switch 40. For example, as shown in Fig. 5, tab 14 has been moved in an engagement direction to engage with an upper surface of plunger 32, but switch 40 has not been toggled. To toggle switch 40, the user presses down on the jar assembly until switch 40 is toggled. When in the depressed position, tab 14 may be blocked from moving in a release direction by wall 46. Even without a wall such as wall 46 blocking tab 14, or when tab 14 is in the position shown in Fig. 5, contact surfaces on plunger 32 may help retain tab 14 in the slot. For example, a convex region 34 includes a slanted blocking surface 36 which impedes movement of the concave region 16 of tab 14 in the release direction.

The terms "toggling", "toggled", and "toggle" are intended to be broadly construed for purposes herein. For example, toggling a switch does not require that a toggle switch or any other specific type of switch be used. For example, a momentary switch, a normally closed switch, a normally open switch, or any other suitable switch may be used such that a switch may be toggled by movements or forces applied to components of a blender. Additionally, toggling a switch is intended to include any action which changes the state of a switch, regardless of whether the change is from open to closed, closed to open, or some other suitable condition change. The term "switch" is also intended to include microprocessor controls or any other controls that involve a logic operation that responds to a change in a physical condition of any part of the blender. For example, the blender base may include an optical sensor that senses the movement of a plunger. The sensor may signal a microprocessor, which then turns on the motor. Such a sequence of events is intended to be included in the meaning of toggling a switch.

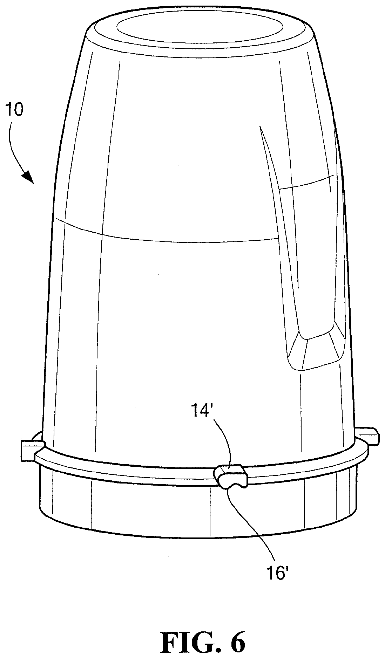

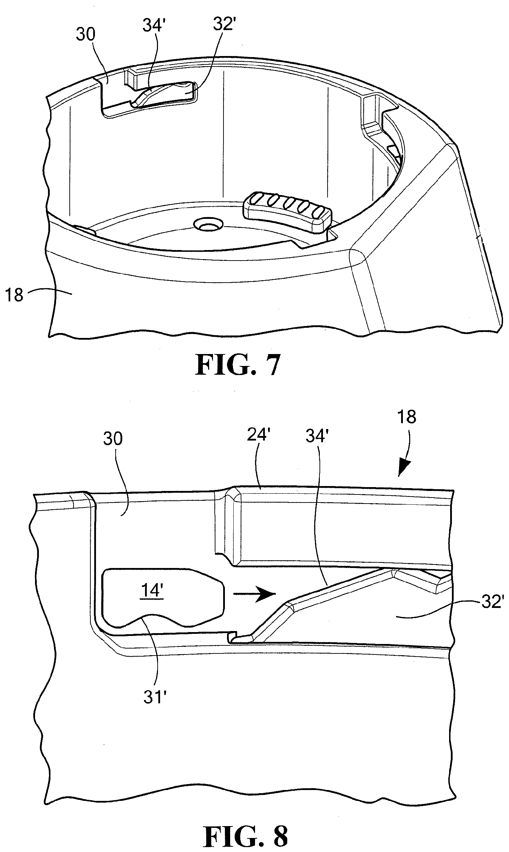

An engagement member having a different shape is shown in the embodiment of Fig. 6. A tab 14' has a concave region 16' which is more rounded than tab 14. Tab 14' may have a height that occupies a significant portion of the receiving slot height such that the associated movable member, such as a depressible plunger 32' (see Figs. 7 and 8), is depressed and held down when tab 14' is moved into a lateral portion of the slot (e.g., by movement in the direction of the arrow of Fig. 8). With an upper surface of tab 14' contacting an upper surface of the later slot portion, plunger 32' is held depressed even if the user removes downward pressure from the jar assembly. In this manner, the plunger may be held in a depressed position to operate the blender for an extended period of time.

The plunger 32' shown in Figs. 7 and 8 has a different shape as compared to the embodiment shown in Figs. 3-5. The rising, leading surface has two distinct slopes. In some embodiments, the upper surface or other contact surfaces of the plunger or other movable member may be curved instead of linear, or may include both linear and curved surfaces.

In some embodiments, the tabs may have convex regions while the depressible plungers have concave regions.

The above described components may be made with various materials, as the invention is not necessarily so limited.

Having thus described several aspects of at least one embodiment of this invention, it is to be appreciated that various alterations, modifications, and improvements will readily occur to those skilled in the art. Accordingly, the foregoing description and drawings are by way of example only.

## Claims

1. An apparatus comprising:
a blender jar (10) having first and second engagement members (14); and
a blender base (18) including:
a motor to drive a drive coupling (22);
ajar mounting portion (24) to receive the blender jar (10);
first and second engagement member receiving slots (30) configured to receive the first and second engagement members (14), respectively, via rotation of the blender jar (10) relative to the base (18) by a user such that each of the first and second engagement members (14) moves through a lateral portion of its respective slot (30);
the first engagement member receiving slot having a movable member (32) within the lateral portion, the moveable member (32) being configured to be moved by rotation of the first engagement member (14) into the lateral portion; and
one or more switches (40) which are:
required to be toggled to permit operation of the motor; and
can be toggled by movement of a movable member (32) in at least one of the first and second receiving slots (30);
wherein
the movable member (32) is arranged to retain the first engagement member (14) in the first receiving slot (30) without each of the one or more switches (40) being toggled; and
additional user force on the jar (10) after the first engagement member (14) has been retained in the first receiving slot (30) toggles the one or more switches (40) that are required to be toggled to permit operation of the motor.

2. An apparatus as in claim 1, wherein the blender base (18) is arranged such that additional user force on the jar (10) pushes the movable member (32), and the resulting movement of the movable member (32) toggles a switch of the one or more switches (40) that are required to be toggled to permit operation of the motor.

3. An apparatus as in claim 1, wherein the blender base (18) is arranged such that the additional user force on the jar (10) pushes a movable member (32) positioned in the second receiving slot (14), and the movable member (32) in the second receiving slot (14) toggles a switch of the one or more switches (40) that is required to be toggled to permit operation of the motor.

4. An apparatus as in claim 1, wherein the first receiving slot (30) has a blocking surface (36 or 46) which impedes movement of the first engagement member (14) in a jar release direction when the first engagement member (14) is retained in the slot (30), the blocking surface (36 or 46) being transverse to the release direction.

5. An apparatus as in claim 4, wherein the blocking surface (36) is on the movable member (32).

6. An apparatus as in claim 5, wherein the blocking surface (36) is slanted relative to the jar release direction.

7. An apparatus as in claim 1, wherein the movable member (32) is a biased, depressible plunger, and the first engagement member (14) and the depressible plunger are arranged such that movement of the first engagement member (14) from a released position to a retained position provides tactile feedback to a user holding the blender jar (10), once the retained positioned is reached.

8. An apparatus as in claim 7, wherein the tactile feedback is provided by the depressible plunger (32) at least partially rebounding to a non-depressed position.

9. An apparatus as in claim 1, wherein the movable member (32) is a biased, depressible plunger having a contact surface with a concave or a convex region (34), the contact surface being arranged to contact the first engagement member (14).

10. An apparatus as in claim 9, wherein the first engagement member (14) has a contact surface with the other of a concave or a convex region (16), the contact surface of the first engagement member (14) being arranged to contact the depressible plunger (32).

11. An apparatus as in claim 1, wherein the first engagement member (14) is movable in the receiving slot (30) toward the movable member (32) in an engagement direction, and the movable member (32) is a biased, depressible plunger having a contact surface with a leading edge that is slanted relative the engagement direction, the contact surface being arranged to contact the first engagement member (14).

12. An apparatus as in claim 1, wherein the first engagement member (14) is movable in the receiving slot (30) toward the movable member (32) in an engagement direction, and the first engagement member (14) has a contact surface with a leading edge that is slanted relative the engagement direction, the contact surface being arranged to contact the movable member (32) in the receiving slot (30).

13. A method of operating a blender, the blender including a blender jar (10) with engagement members (14), and a blender base (18) having a motor and receiving slots (30) to receive the engagement members (14), the method comprising:
aligning the engagement members (14) with the receiving slots (30);
rotating the blender jar (10) to move the engagement members (14) within lateral portion of the receiving slots (30) without turning on the motor or placing the blender in a condition where the motor can be turned on without further movement of the blender jar (10), wherein each of the receiving slots (30) includes a movable member (32), the movable members being arranged to retain the engagement members (14) within the receiving slots; and
pressing on the blender jar (10) to turn on the motor or to place the blender in a condition where the motor can be turned on without further movement of the blender jar.

14. The method of claim 13, wherein:
(a) pressing the blender jar (10) comprises pressing downwardly on the blender jar (10) to press the engagement members (14) against depressible plungers (32) which toggle switches (40) that turn on the blender; or
(b) rotating the blender jar (10) to move the engagement members (14) within lateral portions of the receiving slots (30) causes each of the engagement members (14) to be retained by its respective receiving slot (30).

15. The method of claim 13, wherein each receiving slot (30) includes a depressible plunger (32) with a slanted upper surface to retain its respective engagement member (14).

## Patentansprüche

1. Vorrichtung, umfassend:
ein Mischgefäß (10), aufweisend erste und zweite Eingriffselemente (14); und
eine Mischerbasis (18), aufweisend:
einen Motor zum Antreiben einer Antriebskupplung (22);
einen Mischgefäß-Befestigungsabschnitt (24) zum Aufnehmen des Mischgefäßes (10);
erste und zweite Eingriffselement-Aufnahmeschlitze (30), die so konfiguriert sind, dass sie das erste bzw. das zweite Eingriffselement (14) durch Drehen des Mischgefäßes (10) im Verhältnis zur Basis (18) durch einen Benutzer aufnehmen, so dass sich jedes der ersten und zweiten Eingriffselemente (14) durch einen seitlichen Abschnitt seines jeweiligen Schlitzes (30) bewegt;
wobei der erste Eingriffselement-Aufnahmeschlitz ein bewegliches Element (32) innerhalb des seitlichen Abschnitts aufweist, das bewegliche Element (32) so konfiguriert ist, dass es durch Drehen des ersten Eingriffselements (14) in den seitlichen Abschnitt bewegt werden kann; und
einen oder mehrere Schalter (40), die:
umgeschaltet werden müssen, um den Betrieb des Motors zu ermöglichen; und
durch Bewegen eines beweglichen Elements (32) in mindestens einem der ersten und zweiten Aufnahmeschlitze (30) umgeschaltet werden können;
wobei
das bewegliche Element (32) angeordnet ist, um das erste Eingriffselement (14) im ersten Aufnahmeschlitz (30) zu halten, ohne dass jeder der einen oder mehreren Schalter (40) umgeschaltet wird; und
eine zusätzliche Benutzerkraft auf das Mischgefäß (10), nachdem das erste Eingriffselement (14) im ersten Aufnahmeschlitz (30) gehalten worden ist, den einen oder die mehreren Schalter (40) umschaltet, die umgeschaltet werden müssen, um den Betrieb des Motors zu ermöglichen.

2. Vorrichtung nach Anspruch 1, wobei die Mischerbasis (18) so angeordnet ist, dass eine zusätzliche Anwenderkraft auf das Gefäß (10) das bewegliche Element (32) drückt und die resultierende Bewegung des beweglichen Elements (32) einen Schalter des einen oder der mehreren Schalter (40) umschaltet, der umgeschaltet werden muss, um einen Betrieb des Motors zu ermöglichen.

3. Vorrichtung nach Anspruch 1, wobei die Mischerbasis (18) so angeordnet ist, dass die zusätzliche Anwenderkraft auf das Gefäß (10) ein bewegliches, im zweiten Aufnahmeschlitz (14) positioniertes Element (32) drückt, und das bewegliche Element (32) im zweiten Aufnahmeschlitz (14) einen Schalter des einen oder mehrere Schalter (40) umschaltet, die umgeschaltet werden müssen, um den Betrieb des Motors zu ermöglichen.

4. Vorrichtung nach Anspruch 1, wobei der erste Aufnahmeschlitz (30) eine Sperrfläche (36 oder 46) aufweist, die die Bewegung des ersten Eingriffselements (14) in einer Freigaberichtung des Gefäßes behindert, wenn das erste Eingriffselement (14) im Schlitz (30) gehalten wird, wobei die Sperrfläche (36 oder 46) quer zur Freigaberichtung liegt.

5. Vorrichtung nach Anspruch 4, wobei die Sperrfläche (36) auf dem beweglichen Element (32) vorgesehen ist.

6. Vorrichtung nach Anspruch 5, wobei die Sperrfläche (36) im Verhältnis zur Freigaberichtung des Gefäßes geneigt ist.

7. Vorrichtung nach Anspruch 1, wobei das bewegliche Element (32) ein vorgespannter, niederdrückbarer Kolben ist und das erste Eingriffselement (14) und der niederdrückbare Kolben so angeordnet sind, dass eine Bewegung des ersten Eingriffselements (14) aus einer freigegebenen Position in eine gesperrte Position eine taktile Rückmeldung an einen das Mischgefäß (10) haltenden Benutzer bereitstellt, sobald die gesperrte Position erreicht ist.

8. Vorrichtung nach Anspruch 7, wobei die taktile Rückmeldung durch den niederdrückbaren Kolben (32) bereitgestellt wird, der mindestens teilweise in eine nicht niedergedrückte Position zurückspringt.

9. Vorrichtung nach Anspruch 1, wobei das bewegliche Element (32) ein vorgespannter, niederdrückbarer Kolben ist, der eine Kontaktfläche mit einem konkaven oder konvexen Bereich (34) aufweist, wobei die Kontaktfläche so angeordnet ist, dass sie das erste Eingriffselement (14) berührt.

10. Vorrichtung nach Anspruch 9, wobei das erste Eingriffselement (14) eine Kontaktfläche zu der anderen von einem konkaven oder einem konvexen Bereich (16) aufweist, wobei die Kontaktfläche des ersten Eingriffselements (14) so angeordnet ist, dass sie den niederdrückbaren Kolben (32) berührt.

11. Vorrichtung nach Anspruch 1, wobei das erste Eingriffselement (14) im Aufnahmeschlitz (30) in Richtung zum beweglichen Element (32) in einer Eingriffsrichtung bewegbar ist, und das bewegliche Element (32) ein vorgespannter, niederdrückbarer Kolben ist, der eine Kontaktfläche mit einer Vorderkante aufweist, die im Verhältnis zur Eingriffsrichtung geneigt ist, wobei die Kontaktfläche so angeordnet ist, dass sie das erste Eingriffselement (14) berührt.

12. Vorrichtung nach Anspruch 1, wobei das erste Eingriffselement (14) im Aufnahmeschlitz (30) in Richtung zum beweglichen Element (32) in einer Eingriffsrichtung bewegbar ist, und das erste Eingriffselement (14) eine Kontaktfläche zu einer Vorderkante aufweist, die im Verhältnis zur Eingriffsrichtung geneigt ist, wobei die Kontaktfläche so angeordnet ist, dass sie das bewegliche Element (32) im Aufnahmeschlitz (30) berührt.

13. Verfahren zum Betreiben eines Mischers, der ein Mischgefäß (10) mit Eingriffselementen (14) und eine Mischerbasis (18), aufweisend einen Motor und Aufnahmeschlitze (30) zum Aufnehmen der Eingriffselemente (14), aufweist, wobei das Verfahren Folgendes umfasst:
Ausrichten der Eingriffselemente (14) auf die Aufnahmeschlitze (30);
Drehen des Mischgefäßes (10), um die Eingriffselemente (14) in einen seitlichen Abschnitt der Aufnahmeschlitze (30) zu bewegen, ohne dass der Motor eingeschaltet wird oder der Mischer in einem Zustand platziert wird, in dem der Motor ohne weitere Bewegung des Mischgefäßes (10) eingeschaltet werden kann, wobei jeder der Aufnahmeschlitze (30) ein bewegliches Element (32) aufweist, wobei die beweglichen Elemente angeordnet sind zum Zurückhalten der Eingriffselemente (14) innerhalb der Aufnahmeschlitze; und
Drücken auf das Mischgefäß (10), um den Motor einzuschalten oder um den Mischer in einen Zustand zu platzieren, in dem der Motor ohne weitere Bewegung des Mischgefäßes eingeschaltet werden kann.

14. Verfahren nach Anspruch 13, wobei
(a) Drücken auf das Mischgefäß (10) ein Drücken abwärts auf das Mischgefäß (10) umfasst, um die Eingriffselemente (14) gegen niederdrückbare Kolben (32) zu drücken, die Schalter (40) umschalten, die den Mischer einschalten; oder
(b) Drehen des Mischgefäßes (10) zum Bewegen der Eingriffselemente (14) innerhalb seitlicher Abschnitte der Aufnahmeschlitze (30) bewirkt, dass jedes der Eingriffselemente (14) von seinem Aufnahmeschlitz (30) zurückgehalten wird.

15. Verfahren nach Anspruch 13, wobei jeder Aufnahmeschlitz (30) einen niederdrückbaren Kolben (32) mit einer geneigten Oberfläche zum Zurückhalten seines jeweiligen Eingriffselements (14) aufweist.

## Revendications

1. Appareil comprenant :
un récipient de mélange (10) ayant des premier et second éléments de mise en prise (14) ; et
une base de mélangeur (18) comprenant :
un moteur pour entraîner un couplage d'entraînement (22) ;
une partie de montage de récipient (24) pour recevoir le récipient de mélange (10) ;
des première et seconde fentes de réception d'éléments de mise en prise (30) configurées pour recevoir les premier et second éléments de mise en prise (14) respectivement, via la rotation du récipient de mélange (10) par rapport à la base (18) par un utilisateur de sorte que chacun des premier et second éléments de mise en prise (14) se déplace par le biais d'une partie latérale de sa fente (30) respective ;
la première fente de réception d'élément de mise en prise ayant un élément mobile (32) à l'intérieur de la partie latérale, l'élément mobile (32) étant configuré pour être déplacé par la rotation du premier élément de mise en prise (14) dans la partie latérale ; et
un ou plusieurs commutateurs (40) qui :
doivent être basculés pour permettre le fonctionnement du moteur ; et
peuvent être basculés par le mouvement d'un élément mobile (32) dans au moins l'une des première et seconde fentes de réception (30) ;
dans lequel :
l'élément mobile (32) est agencé pour retenir le premier élément de mise en prise (14) dans la première fente de réception (30) sans que chacun des un ou plusieurs commutateurs (40) ne soit basculé ; et
une force d'utilisateur supplémentaire sur le récipient (10) après que le premier élément de mise en prise (14) a été retenu dans la première fente de réception (30) bascule les un ou plusieurs commutateurs (40) qui doivent être basculés pour permettre le fonctionnement du moteur.

2. Appareil selon la revendication 1, dans lequel la base de mélangeur (18) est agencée de sorte que la force d'utilisateur supplémentaire sur le récipient (10) pousse l'élément mobile (32), et le mouvement résultant de l'élément mobile (32) bascule un commutateur des un ou plusieurs commutateurs (40) qui doivent être basculés pour permettre le fonctionnement du moteur.

3. Appareil selon la revendication 1, dans lequel la base de mélangeur (18) est agencée de sorte que la force d'utilisateur supplémentaire sur le récipient (10) pousse un élément mobile (32) positionné dans la seconde fente de réception (14), et l'élément mobile (32) dans la seconde fente de réception (14) bascule un commutateur des un ou plusieurs commutateurs (40) qui doit être basculé pour permettre le fonctionnement du moteur.

4. Appareil selon la revendication 1, dans lequel la première fente de réception (30) a une surface de blocage (36 ou 46) qui empêche le mouvement du premier élément de mise en prise (40) dans une direction de déblocage de récipient lorsque le premier élément de mise en prise (14) est retenu dans la fente (30), la surface de blocage (36 ou 46) étant transversale à la direction de déblocage.

5. Appareil selon la revendication 4, dans lequel la surface de blocage (36) est sur l'élément mobile (32).

6. Appareil selon la revendication 5, dans lequel la surface de blocage (36) est inclinée par rapport à la direction de déblocage du récipient.

7. Appareil selon la revendication 1, dans lequel l'élément mobile (32) est un piston plongeur sollicité, pouvant être enfoncé, et le premier élément de mise en prise (14) et le piston plongeur pouvant être enfoncé sont agencés de sorte que le mouvement du premier élément de mise en prise (14) d'une position débloquée à une position retenue fournit la réaction tactile à un utilisateur maintenant le récipient de mélange (10), une fois que la position de retenue est atteinte.

8. Appareil selon la revendication 7, dans lequel la réaction tactile est fournie par le piston plongeur pouvant être enfoncé (32) en rebondissant au moins partiellement dans une position non enfoncée.

9. Appareil selon la revendication 1, dans lequel l'élément mobile (32) est un piston plongeur sollicité, pouvant être enfoncé ayant une surface de contact avec une région concave ou convexe (34), la surface de contact étant agencée pour être en contact avec le premier élément de mise en prise (14).

10. Appareil selon la revendication 9, dans lequel le premier élément de mise en prise (14) a une surface de contact avec l'autre parmi une région concave ou convexe (16), la surface de contact du premier élément de mise en prise (14) étant agencée pour être en contact avec le piston plongeur pouvant être enfoncé (32).

11. Appareil selon la revendication 1, dans lequel le premier élément de mise en prise (14) est mobile dans la fente de réception (30) vers l'élément mobile (32) dans une direction de mise en prise, et l'élément mobile (32) est un piston plongeur sollicité, pouvant être enfoncé ayant une surface de contact avec un bord d'attaque qui est incliné par rapport à la direction de mise en prise, la surface de contact étant agencée pour être en contact avec le premier élément de mise en prise (14).

12. Appareil selon la revendication 1, dans lequel le premier élément de mise en prise (14) est mobile dans la fente de réception (30) vers l'élément mobile (32) dans une direction de mise en prise, et le premier élément de mise en prise (14) a une surface de contact avec un bord d'attaque qui est incliné par rapport à la direction de mise en prise, la surface de contact étant agencée pour être en contact avec l'élément mobile (32) dans la fente de réception (30).

13. Procédé pour actionner un mélangeur, le mélangeur comprenant un récipient de mélange (10) avec les éléments de mise en prise (14), et une base de mélangeur (18) ayant un moteur et des fentes de réception (30) pour recevoir les éléments de mise en prise (14), le procédé comprenant les étapes suivantes :
aligner les éléments de mise en prise (14) avec les fentes de réception (30) ;
faire tourner le récipient de mélange (10) pour déplacer les éléments de mise en prise (14) à l'intérieur de la partie latérale des fentes de réception (30) sans mettre en marche le moteur ou en plaçant le mélangeur dans une condition dans laquelle le moteur peut être mis en marche sans mouvement supplémentaire du récipient de mélange (10), dans lequel chacune des fentes de réception (30) comprend un élément mobile (32), les éléments mobiles étant agencés pour retenir les éléments de mise en prise (14) à l'intérieur des fentes de réception ; et
appuyer sur le récipient de mélange (10) pour mettre le moteur en marche ou pour placer le mélangeur dans une condition dans laquelle le moteur peut être mis en marche sans mouvement supplémentaire du récipient de mélange.

14. Procédé selon la revendication 13, dans lequel :
(a) l'étape pour comprimer le récipient de mélange (10) comprend l'étape pour appuyer sur le récipient de mélange (10) afin de comprimer les éléments de mise en prise (14) contre les pistons plongeurs pouvant être enfoncés (32) qui basculent les commutateurs (40) qui mettent en marche le mélangeur ; ou
(b) la rotation du récipient de mélange (10) pour déplacer les éléments de mise en prise (14) à l'intérieur des parties latérales des fentes de réception (30) amène chacun des éléments de mise en prise (14) à être retenu par sa fente de réception (30) respective.

15. Procédé selon la revendication 13, dans lequel chaque fente de réception (30) comprend un piston plongeur pouvant être enfoncé (32) avec une surface supérieure inclinée pour retenir son élément de mise en prise (14) respectif.
